# EUROPÄISCHE PATENTSCHRIFT

(11) **EP 2 103 841 B1**
(45) Veröffentlichungstag und Bekanntmachung des Hinweises auf die Patenterteilung: **12.10.2011**
(21) Anmeldenummer: 09006517.8
(22) Anmeldetag: 25.11.2006
(51) Int. Cl.: F16F 15/137, F16F 15/123, F16H 45/02, F16H 41/24

(54) **Torsionsschwingungsdämpfer**
Torsion vibration damper
Amortisseur de vibrations de torsion

(30) Priorität: 09.12.2005 DE 102005058783
(43) Veröffentlichungstag der Anmeldung: 23.09.2009
(62) Teilanmeldung aus: 06024488.6
(73) Patentinhaber: ZF Friedrichshafen AG, 88038 Friedrichshafen (DE)
(72) Erfinder: Wack, Erwin, 97464 Niederwerrn (DE); Sasse, Christoph, Dr., 97422 Schweinfurt (DE); Sudau, Jörg, 97464 Niederwerrn (DE)

(56) Entgegenhaltungen:
- DE-A1- 3 240 238
- DE-A1- 10 358 901
- GB-A- 2 098 702

## Beschreibung

Die Erfindung bezieht sich auf Torsionsschwingungsdämpfer an einer Überbrückungskupplung einer hydrodynamischen Kupplungsanordnung entsprechend dem Oberbegriff des Anspruches 1 oder 2.

Solche Torsionsschwingungsdämpfer sind aus dem Stand der Technik bekannt. So zeigt beispielsweise die DE 103 58 901 A1 eine hydrodynamische Kopplungsanordnung, die, als Drehmomentwandler realisiert, mit einer Überbrückungskupplung ausgebildet ist, deren Kolben an seiner dem Kupplungsgehäuse zugewandten Seite mit einer Reibfläche versehen ist, über welche er mittels einer Zwischenlamelle mit einer am Kupplungsgehäuse vorgesehenen Gegenreibfläche in Reibverbindung bringbar ist. Die Überbrückungskupplung stellt eine Wirkverbindung zwischen dem mit einem Antrieb, wie der Kurbelwelle einer Brennkraftmaschine, drehfesten Kupplungsgehäuse und dem Torsionsschwingungsdämpfer her, indem ein antriebsseitiges Übertragungselement des letztgenannten drehfest, aber axial verschiebbar, an der Zwischenlamelle angreift. Das antriebsseitige Übertragungselement bildet gemeinsam mit Energiespeichern einer antriebsseitigen Energiespeichergruppe und mit als Zwischen-Übertragungselement des Torsionsschwingungsdämpfers dienenden Deckblechen eine antriebsseitige Dämpfungseinrichtung. Die Deckbleche, die axial zueinander beabstandet sind, bilden ihrerseits zusammen mit Energiespeichern einer abtriebsseitigen Energiespeichergruppe und mit einem abtriebsseitigen Übertragungselement eine abtriebsseitige Dämpfungseinrichtung. Diese steht mit einem abtriebsseitigen Bauteil, wie einer Getriebeeingangswelle, in drehfester Verbindung.

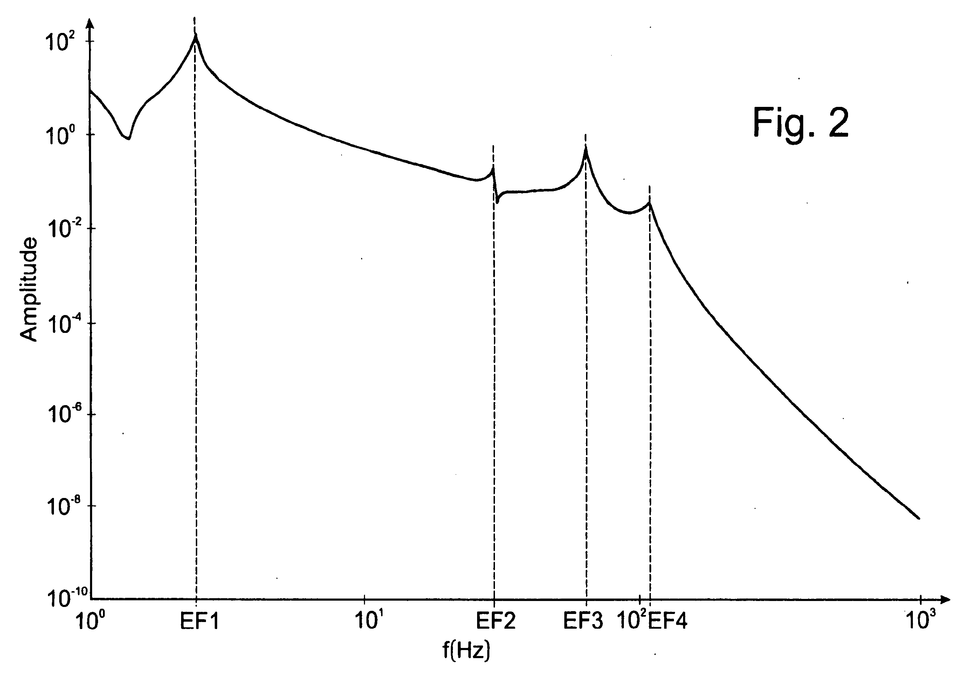

Der Antriebsstrang eines Kraftfahrzeugs kann, bei Betrachtung als freies Schwingungssystem mit einer hydrodynamischen Kupplungsanordnung, grob auf sechs Massen reduziert werden, wobei der Antrieb mit einem Pumpenrad als erste Masse, das Turbinenrad als zweite Masse, die Getriebeeingangswelle als dritte Masse, die Kardanwelle und das Differential als vierte Masse, die Räder als fünfte Masse und das Gesamtfahrzeug als sechste Masse angenommen werden. Bei einem freien Schwingungssystem mit n=sechs Massen treten bekanntermaßen n-1 Eigenfrequenzen, mithin also fünf Eigenfrequenzen, auf, von denen die erste die Rotation des gesamten Schwingungssystems betrifft und im Hinblick auf Schwingungsdämpfung nicht relevant ist. Die Drehzahlen, bei welchen die Eigenfrequenzen angeregt werden, sind von der Zylinderzahl des als Brennkraftmaschine ausgebildeten Antriebs abhängig. In Fig. 2 ist schematisch ein Diagramm zur logarithmischen Darstellung des Amplitudenfrequenzganges am Turbinenrad einer hydrodynamischen Kupplungsanordnung abgebildet.

Zugunsten eines möglichst geringen Kraftstoffverbrauchs besteht die Tendenz, eine Überbrückungskupplung schon bei sehr niedriger Drehzahl zu schließens um schlupfbedingte Verluste im hydrodynamischen Kreis so gering wie möglich zu halten. Für die Überbrückungskupplung bedeutet dies, dass sie bei einer Frequenz geschlossen wird, die zwar oberhalb der ersten und zweiten Eigenfrequenz EF 1 und EF 2, aber noch unterhalb der dritten und vierten Eigenfrequenz EF 3 und EF 4 liegt. Während die ersten beiden Eigenfrequenzen EF 1 und EF 2 im hydrodynamischen Kreis der hydrodynamischen Kopplungsanordnung dämpfbar sind, kann der Antriebsstrang beim Durchfahren der dritten und vierten Eigenfrequenz EF 3 und EF 4 zu unerwünschten Geräuschen angeregt werden, wobei insbesondere die dritte Eigenfrequenz EF 3 noch sehr große Amplituden haben kann.

Zurückkommend auf die DE 103 58 901 A1, weist der Torsionsschwingungsdämpfer beispielsweise gemäß Fig. 1 zwei Dämpfungseinrichtungen auf, von denen die antriebsseitige mit der Zwischenlamelle als einem Bauteil der Überbrückungskupplung und die abtriebsseitige mit der Getriebeeingangswelle als einem abtriebsseitigen Bauteil der hydrodynamischen Kupplungsanordnung in Drehverbindung steht. Wirkungsmäßig zwischen den beiden Dämpfungseinrichtungen ist das Turbinenrad als Masseelement an das Zwischen-Übertragungselement angeschlossen.

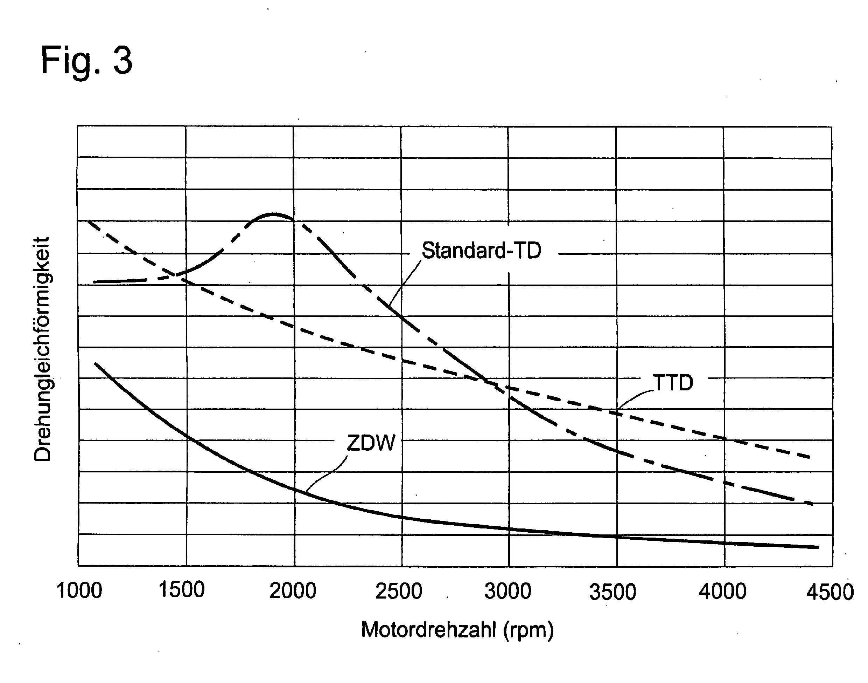

Aufgrund einer derartigen Anbindung des Turbinenrades wirkt die antriebsseitige Dämpfungseinrichtung als ein Torsionsschwingungsdämpfer (TD), der in Fachkreisen als "Standard-TD" bezeichnet ist und, für sich gesehen, über den in Fig. 3 eingezeichneten Dämpfungsverlauf verfügen würde. Ein Standard-TD würde bei dem in Fig. 2 schematisch in logarithmischer Darstellung abgebildeten Amplitudenfrequenzgang am Turbinenrad einer hydrodynamischen Kupplungsanordnung sowohl die Amplitude der dritten Eigenfrequenz EF 3 als auch die Amplitude der vierten Eigenfrequenz EF 4 senken. Deutlich verbliebe allerdings für die dritte Eigenfrequenz EF3 eine Überhöhung der Drehungleichförmigkeit im Drehzahlbereich von etwa 1500 Umdrehungen pro Minute, wie aus Fig. 3 erkennbar ist.

Da bei dem Torsionsschwingungsdämpfer nach der DE 103 58 901 A1 die abtriebsseitige Dämpfungseinrichtung mit ihrem abtriebsseitigen Übertragungselement zu einer Relativdrehung gegenüber dem am Zwischen-Übertragungselement befestigten Turbinenrad befähigt ist, wirkt die abtriebsseitige Dämpfungseinrichtung als ein in Fachkreisen als "Turbinentorsionsdämpfer TTD" bezeichneter Torsionsschwingungsdämpfer, der, für sich gesehen, den in Fig. 3 eingezeichneten Dämpfungsverlauf ergeben würde, bei welchem die sich durch die dritte Eigenfrequenz EF3 ergebende Überhöhung der Drehungleichförmigkeit in einen Bereich um etwa 1000 Umdrehungen pro Minute verlagern und daher im üblichen Drehzahlbereich nur noch wenig stören würde.

Abweichend zu den vorangehenden Ausführungen ergibt sich bei dem Torsionsschwingungsdämpfer nach der DE 103 58 901 A1, der in Fachkreisen als "Zweidämpferwandler ZDW" bezeichnet ist, die Wirkung, dass durch die als Standard-TD geschaltete antriebsseitige Dämpfungseinrichtung die Eigenfrequenzen EF 3 und EF 4 reduziert werden, und durch die als TTD geschaltete abtriebsseitige Dämpfungseinrichtung die hiervon störendere Eigenfrequenz EF 3 zu einer niedrigeren Drehzahl verlagert wird, bei welcher diese eine kaum noch wahrnehmbare Störwirkung entfaltet. Damit ist mit dem ZDW der in Fig. 3 eingezeichnete Dämpfungsverlauf erzielbar.

Ein derartiger Dämpfungsverlauf wird bei modernen Fahrzeugen angestrebt, damit diese auch in dem für den Verbrauch relevanten unteren Teillastbereich mit vollständig eingerückter Überbrückungskupplung betrieben werden können, ohne hierbei Nachteile in Form störender Schwingungen oder Geräusche in Kauf nehmen zu müssen. Sofern allerdings die Überbrückungskupplung bereits bei Drehzahlen in der Größenordnung von 1000 Umdrehungen/Minute geschlossen werden soll, kann selbst der durch ein ZDW bewirkte Dämpfungsverlauf unzureichend sein.

Ein weiterer Torsionsschwingungsdämpfer in einer als Drehmomentwandler realisierten hydrodynamischen Kopplungsanordnung ist aus der gattungsbildenden DE 32 40 238 A1 bekannt. Bevor im einzelnen zu dieser Veröffentlichung Stellung genommen wird, soll festgestellt werden, dass bei dem darin offenbarten Torsionsschwingungsdämpfer zwar jeweils zwei Energiespeichergruppen vorgesehen sind, dass dieser Torsionsschwingungsdämpfer aber nicht als ZDW, wie zuvor ausführlich dargelegt, aufgebaut ist, und daher nicht den mit einem ZDW erzielbaren, vorteilhaften Dämpfungsverlauf zu bieten vermag.

Bei dem in der DE 32 40 238 A1 behandelten Torsionsschwingungsdämpfer weist die antriebsseitige Energiespeichergruppe ausschließlich Energiespeicher gleicher Federsteifigkeit auf, die abtriebsseitige Energiespeichergruppe dagegen Energiespeicher zweier unterschiedlicher Federsteifigkeiten, die zudem höher sind als die Federsteifigkeit der Energiespeicher der antriebsseitigen Energiespeichergruppe. Bei Einleitung von Momenten in den Torsionsschwingungsdämpfer verformen sich zunächst hauptsächlich die Energiespeicher der antriebsseitigen Energiespeichergruppe, und erst bei weiter ansteigenden Momenten erfahren auch die Energiespeicher der abtriebsseitigen Energiespeichergruppe eine zunehmende Verformung.

Der Erfindung liegt die Aufgabe zugrunde, einen Torsionsschwingungsdämpfer an einer Überbrückungskupplung einer hydrodynamischen Kopplungsanordnung mit zumindest zwei Dämpfungseinrichtungen so auszubilden, dass unerwünschte Schwingungen oder Geräusche nicht mehr störend in Erscheinung treten.

Diese Aufgabe wird durch die Merkmale des Anspruches 1 oder 2 gelöst.

Ausgangspunkt der Erfindung ist ein Torsionsschwingungsdämpfer mit wenigstens zwei Energiespeichergruppen, von denen eine erste Energiespeichergruppe, vorzugsweise die antriebsseitige Energiespeichergruppe, über zumindest einen Energiespeicher verfügt, dem zur Erzeugung einer Kennlinie ein einziger Kennlinienabschnitt genügt. Eine zweite Energiespeichergruppe des Torsionsschwingungsdämpfers, vorzugsweise die abtriebsseitige Energiespeichergruppe, weist wenigstens zwei unterschiedliche Energiespeicher zur Erzeugung einer Kennlinie mit mindestens zwei Kennlinienabschnitten auf. Entsprechend der Ausführung des Torsionsschwingungsdämpfers gemäß Anspruch 1 oder 2 kann dafür gesorgt werden, dass zwischen ausschließlich gleichartigen Energiespeichern der vorzugsweise ersten Energiespeichergruppe und den jeweils ersten Energiespeichern der vorzugsweise zweiten Energiespeichergruppe ein vorbestimmtes Steifigkeitsverhältnis SV gebildet wird. Vorteilhafterweise kann die erste Energiespeichergruppe nur bis zu einem vergleichbar geringen Anschlagmoment ausgelegt sein, wobei dieses Anschlagmoment lediglich einem Teil des von einem Antrieb, wie der Kurbelwelle einer Brennkraftmaschine, lieferbaren Momentes, entspricht. Das bedeutet, dass bei einer Momentenanforderung vom Antrieb, die dieses Anschlagmoment nicht überschreitet, sowohl die erste Energiespeichergruppe als auch die zweite Energiespeichergruppe wirksam ist, bei einer darüber liegenden Momentenanforderung dagegen allein die zweite Energiespeichergruppe. Als Vorteil für eine derartige Ausführung ergibt sich eine sehr niedrig ausführbare Steifigkeit der ersten Energiespeichergruppe, da diese nicht das volle vom Antrieb lieferbare Drehmoment aufnehmen muss. Aus diesem Grund wird die erste Energiespeichergruppe bevorzugt radial außerhalb der abtriebsseitigen Energiespeichergruppe angeordnet, und erhält auf diese Weise einen großen Federweg.

Bei dieser Ausführung des Torsionsschwingungsdämpfers verläuft die Summenkennlinie, gebildet aus einer einzigen, ersten Kennlinie und einer aus zwei Kennlinienabschnitten bestehenden zweiten Kennlinie, zumindest im wesentlichen ohne Knickstelle oder ohne einen Bereich mit einer deutlich wahrnehmbaren Diskontinuität.

Bei der Lösung gemäß Anspruch 1 sind die Energiespeicher der antriebsseitigen Energiespeichergruppe von geringerer Steifigkeit als die ersten Energiespeicher der abtriebsseitigen Energiespeichergruppe. Für das Steifigkeitsverhältnis SV der Energiespeicher der antriebsseitigen Energiespeichergruppe zu den ersten Energiespeichern der abtriebsseitigen Energiespeichergruppe wurde herausgefunden, dass sich in einem Bereich für dieses Steifigkeitsverhältnis von 0,3 bis 1,0 ein besonders vorteilhaftes Dämpfungsverhalten für den Torsionsschwingungsdämpfer einstellt.

Vorteilhafterweise liegt der höhere Momentenwert in einem Bereich zwischen 110% und 120% des vom Antrieb lieferbaren Moments, der geringere Momentenwert dagegen in einem Bereich zwischen 80% und 100% dieses Moments. Der geringere Momentenwert ist demnach mit Vorzug in einem Bereich zwischen 10% und 40% unterhalb des höheren Momentenwertes angesiedelt.

Eine derartige Auslegung der entsprechenden Momentenwerte ist bei Ausführung des Torsionsschwingungsdämpfers nach Anspruch 2 vorteilhaft. Der höhere Momentenwert ME4 ist im Fall dieser Ausführung dem zweiten Kennlinienabschnitt der zweiten Kennlinie der Energiespeichergruppe mit der höheren Steifigkeit zugeordnet, der geringere Momentenwert dagegen dem einzigen Kennlinienabschnitt der ersten Kennlinie (Momentenwert ME1), also der Energiespeichergruppe mit der geringeren Steifigkeit.

Es kann aber auch eine entgegengesetzte Auslegung der beiden Energiespeichergruppen zueinander erfolgen und vorteilhaft sein.

Durch Ausbildung der zur Aufnahme von Energiespeichern mit unterschiedlichen Steifigkeiten vorgesehenen Ausnehmungen des Zwischen-Übertragungselementes sowie des abtriebsseitigen Übertragungselementes der abtriebsseitigen Dämpfungsvorrichtung mit unterschiedlichen Distanzwinkelbereichen (ϕ1, ϕ2) zueinander zur Erzeugung unterschiedlich breiter Stege zwischen jeweils zwei Ausnehmungen wird für eine gleichmäßigere Materialbelastung an den Stegen gesorgt, und zwar insbesondere in demjenigen Bereich derselben, an welchem sich das entsprechende Ende des jeweiligen Energiespeichers abstützt, demnach also angrenzend an die jeweils in Drehmomentübertragungsrichtung vorausgehende Ausnehmung, was insbesondere bei dem abtriebsseitigen Übertragungselement von erheblicher Bedeutung ist. Hierbei werden durch die anspruchsgemäße Maßnahme diejenigen Stege, die zur Aufnahme der dem ersten Kennlinienabschnitt zugeordneten Energiespeicher geringerer Steifigkeit dienen, zur Verschmalerung durch einen geringeren Distanzwinkelbereich (ϕ1) zwischen den Ausnehmungen aneinander angenähert, während die anderen Stege, die zur Aufnahme der dem zweiten Kennlinienabschnitt zugeordneten Energiespeicher höherer Steifigkeit vorgesehen sind, zur Verbreiterung durch einen größeren Distanzwinkelbereich (ϕ2) zwischen den Ausnehmungen weiter voneinander beabstandet sind. Diese Auslegung der Stege erfolgt jeweils für die Wirkrichtung der Energiespeicher bei Zugbetrieb, da nur hierbei die anliegenden Momente den jeweils maximalen Betrag annehmen können.

Die Erfindung ist anhand von Ausführungsbeispielen näher erläutert. Es zeigt:
- Fig. 1:: die obere Hälfte eines Längsschnittes durch eine hydrodynamische Kupplungsanordnung mit einer Überbrückungskupplung und einem Torsionsschwingungsdämpfer, der über zwei Energiespeichergruppen verfügt;
- Fig. 2:: ein schematisches Diagramm zur logarithmischen Darstellung des Amplitudenfrequenzganges am Turbinenrad der hydrodynamischen Kupplungsanordnung;
- Fig. 3:: eine schematische Darstellung des Drehungleichförmigkeitsverlaufes unterschiedlicher Torsionsschwingungsdämpfer;
- Fig. 4:: ein Kennliniendiagramm für den Torsionsschwingungsdämpfer mit einer Summenkennlinie, die sich aus einer ersten Kennlinie mit einem einzigen Kennlinienabschnitt und aus einer zweiten Kennlinie mit zwei unterschiedlichen Kennlinienabschnitten ergibt;
- Fig. 5:: eine Nabenscheibe der abtriebsseitigen Energiespeichergruppe, aus Blickrichtung A in Fig. 1 betrachtet;
- Fig.6:: die antriebsseitige Energiespeichergruppe mit ausschließlich gleichen Energiespeichern;
- Fig. 7:: eine Drosselklappe zur Beeinflussung des Leistungsverhaltens eines vor der hydrodynamischen Kopplungsvorrichtung angeordneten Antriebs.

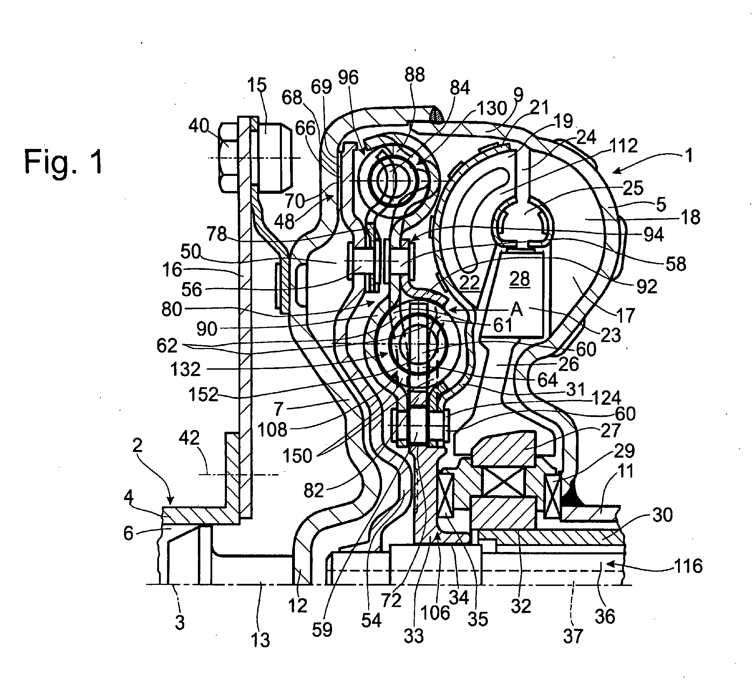

In Fig. 1 ist eine hydrodynamische Kupplungsanordnung 1 in Form eines hydrodynamischen Drehmomentwandlers dargestellt, der um eine Drehachse 3 Rotationsbewegungen auszuführen vermag. Die hydrodynamische Kupplungsanordnung 1 verfügt über ein Kupplungsgehäuse 5, das an seiner einem Antrieb 2, wie beispielsweise der Kurbelwelle 4 einer Brennkraftmaschine, zugewandten Seite, einen Gehäusedeckel 7 aufweist, der fest mit einer Pumpenradschale 9 verbunden ist. Diese geht im radial inneren Bereich in eine Pumpenradnabe 11 über.

Zurückkommend auf den Gehäusedeckel 7, weist dieser im radial inneren Bereich eine einen Lagerzapfen 13 tragende Zapfennabe 12 auf, wobei der Lagerzapfen 13 in bekannter Weise in einer Aussparung 6 der Kurbelwelle 4 zur antriebsseitigen Zentrierung des Kupplungsgehäuses 5 aufgenommen ist. Weiterhin verfügt der Gehäusedeckel 7 über eine Befestigungsaufnahme 15, die zur Befestigung des Kupplungsgehäuses 5 am Antrieb 2 dient, und zwar über die Flexplatte 16. Diese ist mittels Befestigungselementen 40 an der Befestigungsaufnahme 15 und mittels nur schematisch angedeuteten Befestigungselementen 42 an der Kurbelwelle 4 befestigt.

Die bereits erwähnte Pumpenradschale 9 bildet zusammen mit Pumpenradschaufeln 18 ein Pumpenrad 17, das mit einem eine Turbinenradschale 21 und Turbinenradschaufeln 22 aufweisenden Turbinenrad 19 sowie mit einem mit Leitradschaufeln 28 versehenen Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Die Leitradschaufeln 28 des Leitrades 23 sind auf einer Leitradnabe 26 vorgesehen, die auf einem Freilauf 27 angeordnet ist. Der Letztgenannte stützt sich über eine Axiallagerung 29 an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist. Die als Hohlwelle ausgebildete Stützwelle 30 ihrerseits umschließt eine als abtriebsseitiges Bauteil 116 der hydrodynamischen Kupplungsvorrichtung 1 dienende Getriebeeingangswelle 36, die mit einer Mittenbohrung 37 zum Durchgang von Hydraulikflüssigkeit versehen ist. Die Getriebeeingangswelle 36 nimmt über eine Verzahnung 34 eine Torsionsdämpfernabe 33 drehfest, aber axial verschiebbar auf, wobei diese Torsionsdämpfernabe 33 zur relativ drehbaren Aufnahme eines Turbinenradfußes 31 dient. Die Torsionsdämpfernabe 33 stützt sich einerseits über eine Axiallagerung 35 am bereits genannten Freilauf 27 ab, und kommt andererseits über einen Kolben 54 einer Überbrückungskupplung 48 am Gehäusedeckel 7 zur Anlage.

Die bereits erwähnte Mittenbohrung 37 der Getriebeeingangswelle 36 dient zur Versorgung des hydrodynamischen Kreises 24 sowie zur Druckbeaufschlagung der Überbrückungskupplung 48, wozu eine Verbindung mit einer Steuervorrichtung und einem Hydraulikflüssigkeitsvorrat erforderlich ist. Weder die Steuervorrichtung noch der Hydraulikflüssigkeitsvorrat sind zeichnerisch dargestellt, können aber der Fig. 1 der DE 44 23 640 A1 entnommen werden und sind daher als inhaltlich in die vorliegende Patentanmeldung aufgenommen zu betrachten.

Über die Mittenbohrung 37 der Getriebeeingangswelle 36 eingeströmte Hydraulikflüssigkeit gelangt in eine Kammer 50, die axial zwischen dem Gehäusedeckel 7 und dem Kolben 54 der Überbrückungskupplung 48 angeordnet ist. Der Kolben 54 ist mit seiner von der Kammer 50 abgewandten Seite dem hydrodynamischen Kreis 24 zugewandt und in Abhängigkeit von den Druckverhältnissen im hydrodynamischen Kreis 24 sowie in der Kammer 50 zum Ein- oder Ausrücken der Überbrückungskupplung 48 zwischen zwei unterschiedlichen Grenzstellungen axial bewegbar.

Der Kolben 54 trägt in seinem radial äußeren Bereich an der dem Gehäusedeckel 7 zugewandten Seite einen Reibbelag 68, wobei durch diesen ein Reibbereich 69 bereitgestellt wird, der mit je einem Gegenreibbereich 70 am Gehäusedeckel 7 zusammenwirkt. Radial innerhalb des Reibbelages 68 ist am Kolben 54 mittels Vernietung 56 ein antriebsseitiges Übertragungselement 78 eines Torsionsschwingungsdämpfers 80 befestigt.

Das antriebsseitige Übertragungselement 78 verfügt über einen sich im Wesentlichen radial erstreckenden Bereich, der über nach radial außen greifende Ansteuerelemente 84 verfügt, die mit einer ersten Energiespeichergruppe 130, nachfolgend als antriebsseitige Energiespeichergruppe 130 bezeichnet, in Wirkverbindung versetzbar sind. Die antriebsseitige Energiespeichergruppe 130 verläuft im Wesentlichen in Umfangsrichtung und stützt sich anderenends an Ansteuerelementen 88 eines antriebsseitigen Deckbleches 90 ab, wobei dieses die antriebsseitige Energiespeichergruppe 130 auf einem Teil ihres Umfangs umfasst. Das antriebsseitige Deckblech 90 steht über eine Vernietung 58 sowie eine Verzapfung 59 in drehfester Verbindung mit einem abtriebsseitigen Deckblech 92, über die Verzapfung 59 darüber hinaus auch mit dem Turbinenradfuß 31. Die Deckbleche 90 und 92 dienen gemeinsam als Zwischen-Übertragungselement 94 des Torsionsschwingungsdämpfers 80. Die Verzapfung 59 dient in einer Zusatzfunktion als Bauteil einer Verdrehwinkelbegrenzung 124 zwischen den Deckblechen 90, 92 und einer mit der Torsionsdämpfernabe 33 drehfesten Nabenscheibe 82, indem die Verzapfung 59 in Umfangsaussparungen 72 eingreift, die in der Nabenscheibe 82 vorgesehen sind, und sich in Umfangsrichtung langlochförmig erstrecken. Die Umfangsaussparungen 72 lassen dadurch eine umfangsseitig begrenzte Relativbewegung der Verzapfung 59 in Umfangsrichtung zu. Die Nabenscheibe 82 bildet gemeinsam mit der Torsionsdämpfernabe 33 ein abtriebsseitiges Übertragungselement 106 des Torsionsschwingungsdämpfers 80.

Zurückkommend auf die als Zwischen-Übertragungselement 94 wirksamen Deckbleche 90, 92, sind diese radial zwischen Vernietung 58 und Verzapfung 59 mit Ausnehmungen 150 in Form von Federfenstern 62 für eine zweite Energiespeichergruppe 132, die nachfolgend als abtriebsseitige Energiespeichergruppe 132 bezeichnet ist, versehen, während die als abtriebsseitiges Übertragungselement 106 der abtriebsseitigen Dämpfungsvorrichtung 108 vorgesehene Nabenscheibe 82 mit Ansteuerelementen 60 für diese Energiespeichergruppe 132 ausgebildet ist, zwischen denen, in Umfangsrichtung gesehen, jeweils Ausnehmungen 152 in Form von Federfenstern 64 für die abtriebsseitige Energiespeichergruppe 132 vorgesehen sind.

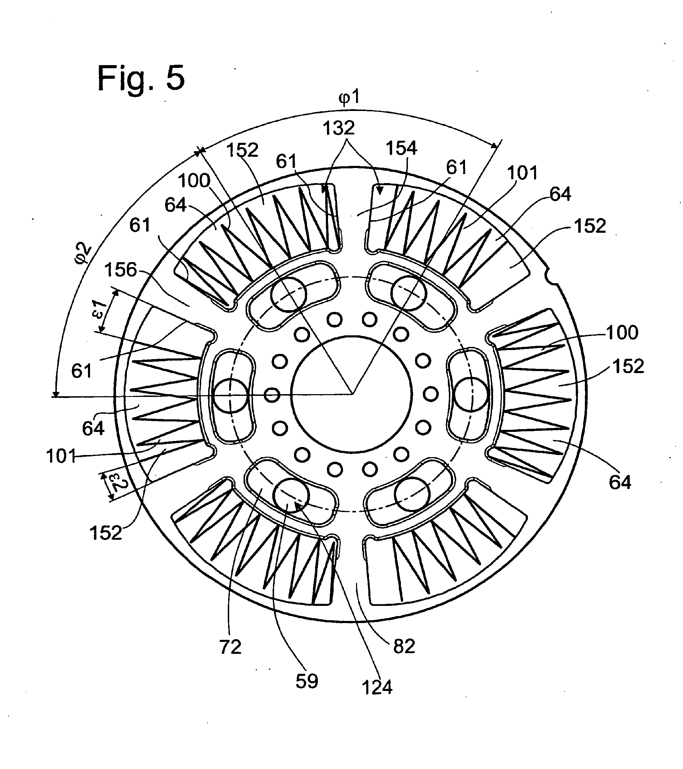

Die Ausnehmungen 150 im Zwischen-Übertragungselement 92 nehmen die Energiespeicher 100, 101 der abtriebsseitigen Energiespeichergruppe 132 in Umfangsrichtung jeweils beiderends anliegend auf. Auch die für die ersten Energiespeicher 100 der abtriebsseitigen Energiespeichergruppe 132 vorgesehenen Ausnehmungen 152 in der Nabenscheibe 82 nehmen diese ersten Energiespeicher 100 in Umfangsrichtung beiderends auf, so dass die Energiespeicher 100 von Beginn der Drehmomentübertragung an wirksam sein können. Im Gegensatz dazu sind die für die zweiten Energiespeicher 101 der abtriebsseitigen Energiespeichergruppe 132 vorgesehenen Ausnehmungen 152 in der Nabenscheibe 82 in Umfangsrichtung größer als diese Energiespeicher 101 ausgebildet, um gemäß Fig. 5 einen bei Zugbetrieb wirksamen Freidrehwinkel ε1 und einen bei Schubbetrieb wirksamen Freidrehwinkel ε2 zu ermöglichen, bevor die zweiten Energiespeicher 101 jeweils wirksam werden.

Die Federfenster 64 der Nabenscheibe 82 schließen, in Umfangsrichtung gesehen, Stege 154, 156 ein, die funktional als Ansteuerelemente 61 für die Energiespeicher 100, 101 der abtriebsseitigen Energiespeichergruppe 132 wirksam sind. Die ersten Energiespeicher 100 dieser Energiespeichergruppe 132 können über eine geringere Steifigkeit als die zweiten Energiespeicher 101 verfügen. Hierdurch bedingt, kann durch die zweiten Energiespeicher 101 an den diesen zugeordneten zweiten Stegen 156 eine höhere Spannung ausgelöst werden, als dies durch die ersten Energiespeicher 100 an deren Stegen 154 verursacht wird. Dieses Problem macht sich insbesondere bei Zugbetrieb unter Vollast bemerkbar, weshalb auch jeweils der in Zugrichtung benachbarte Steg 154, 156 in Zuordnung zum jeweiligen Energiespeicher 100, 101 ausgebildet ist. Aus diesem Grund werden die den ersten Energiespeichern 100 in Zugrichtung zugeordneten Federfenster 64 um einen vorbestimmten Winkelbetrag, vorzugsweise um etwa 1°, aneinander angenähert, während die in Zugrichtung mit zumindest einem der zweiten Energiespeicher 101 zusammen wirkenden Federfenster 64 um einen ebenfalls vorbestimmten Winkelbetrag, vorzugsweise um etwa 1 °, voneinander weiter beabstandet sind. Bei Annäherung der Federfenster 64 um etwa 1° aneinander entsteht ein geringerer Distanzwinkelbereich ϕ1, der bei der Anzahl von sechs Federfenstern den Wert von 59° annimmt und verschmalerte Stege 154 entstehen lässt, während bei Entfernung der Federfenster 64 um etwa 1° voneinander ein vergrößerter Distanzwinketbereich ϕ2 gebildet wird, der bei der Anzahl von sechs Federfenstern den Wert von 61° annimmt und verbreiterte Stege 156 entstehen lässt. Aufgrund ihrer unterschiedlichen Breite sind die Festigkeiten der Stege 154, 156 gut an die sich aus den unterschiedlichen Steifigkeiten der Energiespeicher 100, 101 ergebenden unterschiedlichen Spannungen angepasst, so dass sich für die Stege 154, 156 jeweils eine spannungsoptimierte Umfangsbemessung ergibt.

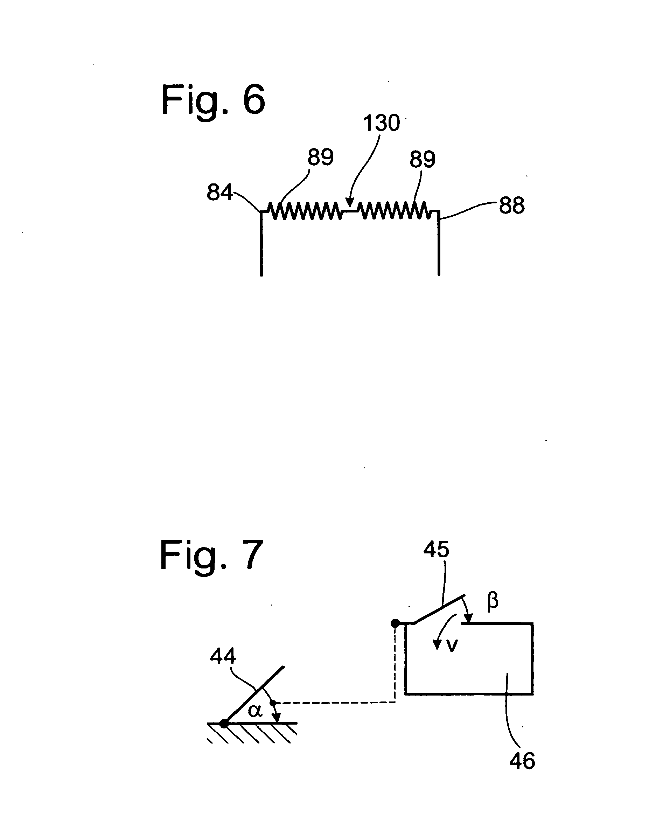

Zur antriebsseitigen Energiespeichergruppe 130 bleibt nachzutragen, dass diese gemäß Fig. 6 ausschließlich gleiche Energiespeicher 89 aufweist, deren Steifigkeiten sich somit nicht voneinander unterscheiden.

Aus dem antriebsseitigen Übertragungselement 78 soll in Verbindung mit der antriebsseitien Energiespeichergruppe 130 und dem Zwischen-Übertragungselement 94 eine antriebsseitige Dämpfungseinrichtung 96 des Torsionsschwingungsdämpfers 80 gebildet werden, aus dem Zwischen-Übertragungselement 94 zusammen mit der abtriebsseitigen Energiespeichergruppe 132 und dem abtriebsseitigen Übertragungselement 106 eine abtriebsseitige Dämpfungseinrichtung 108. Bei dem Torsionsschwingungsdämpfer 80 dient das Turbinenrad 19 als Masseelement 112, das wirkungsmäßig zwischen den beiden Dämpfungseinrichtungen 96 und 108 am Zwischen-Übertragungselement 94 angebunden ist.

Da für die antriebsseitige Dämpfungseinrichtung 96 das Zwischen-Übertragungselement 94 als abtriebsseitiges Bauteil wirksam ist, und dieses über die Verzapfung 59 mit dem Turbinenrad 19 in Festverbindung steht, wirkt die antriebsseitige Dämpfungseinrichtung 96 wie ein Standardtorsionsdämpfer, in Fachkreisen als Standard-TD bezeichnet (vgl. Fig. 3). Im Gegensatz dazu dient das Zwischen-Übertragungselement 94 bei der abtriebsseitigen Dämpfungseinrichtung 108 als antriebsseitiges Bauteil, während das abtriebsseitige Übertragungselement 106 dieser Dämpfungseinrichtung 108 zwar mit der Torsionsdämpfernabe 33 drehfest, gegenüber dem Turbinenrad 19 dagegen relativ drehbar ist. Insofern ist die abtriebsseitige Dämpfungseinrichtung 108 als Turbinentorsionsdämpfer TTD (Fig. 3) wirksam.

Damit sind bei dem in Fig. 1 gezeigten Torsionsschwingungsdämpfer 80 ein Standardtorsionsdämpfer und ein Turbinentorsionsdämpfer in einer Baueinheit in Reihe geschaltet und können sich demnach bezüglich ihrer jeweils spezifischen Wirkungen ergänzen. Es handelt sich somit gemäß Fig. 3 um einen ZDW.

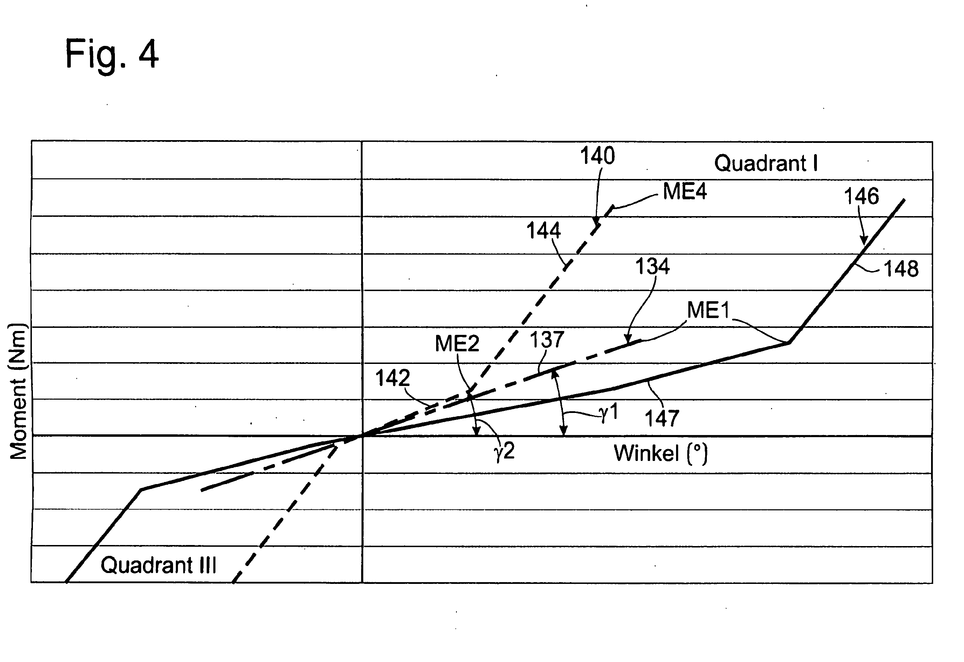

Fig. 4 zeigt ein Diagramm, bei welchem zur Darstellung von Kennlinien der Energiespeichergruppen 130, 132 das wirksame Drehmoment über dem zugeordneten Auslenkwinkel der Energiespeicher der Energiespeichergruppen aufgetragen ist, und zwar im Quadranten I zur Darstellung bei Zugbetrieb und im Quadranten III zur Darstellung bei Schubbetrieb. In dem Diagramm ist eine der antriebsseitigen Energiespeichergruppe 130 zugeordnete erste Kennlinie 134 in strichpunktierter Ausführung dargestellt, eine der abtriebsseitigen Energiespeichergruppe 132 zugeordnete zweite Kennlinie 140 in gestrichelter Ausführung, und eine durch Überlagerung beider Kennlinien 134, 140 gebildete Summenkennlinie 146 in unterbrechungsfreier Ausführung.

In Fig. 7 ist ein dem Antrieb 2 zugeordnetes Fahrpedal 44 um einen Winkel α betätigt, bei welchem eine nachgeordnete Drosselklappe 45 einer Gemischaufbereitungsstation 46 um einen Winkel β geöffnet ist. Der Winkel β kann bei diesem energiesparenden Modus einem Bereich von etwa 30% bis 80% der Auslenkweite der Drosselklappe 45 liegen.

In Fig. 4 ist, die Situation im Zugbetrieb betrachtend, die der antriebsseitigen Energiespeichergruppe 130 zugeordnete erste Kennlinie 134 mit einem einzigen Kennlinienabschnitt 137 versehen, der den ausschließlich gleichartigen Energiespeichern 89 zugeordnet ist. Im Gegensatz dazu ist die der abtriebsseitigen Energiespeichergruppe 132 zugeordnete zweite Kennlinie 140 mit einem ersten Kennlinienabschnitt 142 und mit einem sich daran anschließenden zweiten Kennlinienabschnitt 144 versehen, wobei der erste Kennlinienabschnitt 142 den ersten Energiespeichern 100 und der zweite Kennlinienabschnitt 144 den zweiten Energiespeichern 101 der abtriebsseitigen Energiespeichergruppe 132 zugeordnet ist.

Wie sich aus dem geringeren Steigungswinkel γ1 des Kennlinienabschnittes 137 der ersten Kennlinie 134 im Vergleich zum Steigungswinkel γ2 des ersten Kennlinienabschnittes 142 der zweiten Kennlinie 140 ergibt, sind die Energiespeicher 89 der antriebsseitigen Energiespeichergruppe 130 von geringerer Steifigkeit als die ersten Energiespeicher 100 der abtriebsseitigen Energiespeichergruppe 132. Für. das Steifigkeitsverhältnis SV der Energiespeicher 89 der antriebsseitigen Energiespeichergruppe 130 zu den ersten Energiespeichern 100 der abtriebsseitigen Energiespeichergruppe 132 wurde herausgefunden, dass sich in einem Bereich für dieses Steifigkeitsverhältnis von 0,3 bis 1,0 ein besonders vorteilhaftes Dämpfungsverhalten für den Torsionsschwingungsdämpfer 80 einstellt.

Da der Kennlinienabschnitt 137 der ersten Kennlinie 130 bei einem anderen Drehmoment ME1 endet, als der erste Kennlinienabschnitt 142 der zweiten Kennlinie 132 beim Drehmoment ME2 in deren zweiten Kennlinienabschnitt 144 übergeht, weist die resultierende Summenkennlinie 146 bei demjenigen Winkelgrad, der dem Drehmoment ME2 zugeordnet ist, einen zumindest im wesentlichen übergangsfreien Summenkennlinienabschnitt 147 auf. Erst bei Erreichen des Drehmomentes ME1 durch den Kennlinienabschnitt 137 der ersten Kennlinie 130 entsteht eine Diskontinuität, und zwar beim Übergang vom ersten Summenkennlinienabschnitt 147 auf einen zweiten Summenkennlinienabschnitt 148. Diese Diskontinuität tritt allerdings erst bei einem relativ großen Drehmoment ME1 auf, und damit außerhalb des verbrauchsrelevanten Teillastbereichs. Insofern ist diese Diskontinuität, bei welcher der Verformungsweg der dem Kennlinienabschnitt 137 der ersten Kennlinie 130 zugeordneten Energiespeicher 89 zumindest im wesentlichen aufgebraucht ist, unkritisch.

Bei dieser Ausführung der Energiespeichergruppen 130, 132 des Torsionsschwingungsdämpfers 80 sind zunächst beide Energiespeicher 100, 101 der abtriebsseitigen Energiespeichergruppe 132 wirksam, bevor allein die zweiten Energiespeicher 101 der abtriebsseitigen Energiespeichergruppe 130 verformt werden.

### Bezugszeichenliste

- 1: hydrod. Kupplungsanordnung
- 2: Antrieb
- 3: Drehachse
- 4: Kurbelwelle
- 5: Kupplungsgehäuse
- 6: Aussparung
- 7: Gehäusedeckel
- 9: Pumpenradschale
- 11: Pumpenradnabe
- 12: Zapfennabe
- 13: Lagerzapfen
- 15: Befestigungsaufnahme
- 16: Flexplate
- 17: Pumpenrad
- 18: Pumpenradschaufeln
- 19: Turbinenrad
- 21: Turbinenradschale
- 22: Turbinenradschaufeln
- 23: Leitrad
- 24: hydrodyn. Kreis
- 25: Innentorus
- 26: Leitradnabe
- 27: Freilauf
- 28: Leitradschaufeln
- 29: Axiallagerung
- 30: Stützwelle
- 31: Turbinenradfuß
- 32: Verzahnung
- 33: Torsionsdämpfernabe
- 34: Verzahnung
- 35: Axiallagerung
- 36: Getriebeeingangswelle
- 37: Mittenbohrung
- 38: Abdichtung
- 40, 42: Befestigungselemente
- 44: Fahrpedal
- 45: Drosselklappe
- 46: Gemischaufbereitungsbereich
- 48: Überbrückungskupplung
- 50: Kammer
- 54: Kolben
- 56: Vernietung
- 58: Vernietung
- 59: Verzapfung
- 60, 61: Ansteuerelemente
- 62, 64: Federfenster
- 66: Reibbelagträger
- 68: Reibbeläge
- 69: Reibbereich
- 70: Gegenreibbereich
- 72: Umfangsaussparungen
- 78: antriebss. Übertragungselement
- 80: Torsionsschwingungsdämpfer
- 82: radial äußere Nabenscheibe
- 84: Ansteuerelemente
- 88: Ansteuerelemente
- 89: ausschließlich gleichartige Energiespeicher
- 90,92: Deckbleche
- 94: Zwischen-Übertragungselement
- 96: antriebss. Dämpfungseinrichtung
- 100: erste Energiespeicher
- 101: zweite Energiespeicher
- 104: radial innere Nabenscheibe
- 106: abtriebss. Übertragungselement
- 108: abtriebss. Dämpfungseinrichtung
- 112: Masseelement
- 116: abtriebss. Bauteil
- 124: Verdrehwinkelbegrenzung
- 130: antriebsseitige Energiespeichergruppe
- 132: abtriebsseitige Energiespeichergruppe
- 134: erste Kennlinie
- 137: einziger Kennlinienabschnitt
- 140: zweite Kennlinie
- 142: erster Kennlinienabschnitt
- 144: zweiter Kennlinienabschnitt
- 146: Summenkennlinie
- 147: erster Summenkennlinienabschnitt
- 148: zweiter Summenkennlinienabschnitt
- 150: Ausnehmungen des Zwischen-Übertragungselementes
- 152: Ausnehmungen des abtriebsseitigen Übertragungselementes
- 154, 156: Stege

## Patentansprüche

1. Torsionsschwingungsdämpfer an einer Überbrückungskupplung (48) einer hydrodynamischen Kopplungsanordnung (1), die zur Bildung eines hydrodynamischen Kreises (24) zumindest ein Pumpenrad (17) und ein Turbinenrad (19) aufweist, mit einer antriebsseitigen Dämpfungsvorrichtung (96), die mit dem Gehäuse (5) der Kopplungsanordnung (1) in Wirkverbindung bringbar und mit einem antriebsseitigen Übertragungselement (78) versehen ist, das über eine antriebsseitige Energiespeichergruppe (130) mit einem Zwischen-Übertragungselement (94) verbunden ist, und mit einer abtriebsseitigen Dämpfungsvorrichtung (108) für eine Wirkverbindung des Zwischen-Übertragungselementes (94) über eine abtriebsseitige Energiespeichergruppe (132) mit einem abtriebsseitigen Übertragungselement (106), das mit einem abtriebsseitigen Bauteil (116) der hydrodynamischen Kopplungsanordnung (1) verbunden ist, wobei zumindest eine erste Energiespeichergruppe (130) über ausschließlich gleichartige Energiespeicher (89) zur Erzeugung einer Kennlinie (134) mit einem einzigen Kennlinienabschnitt (137) und wenigstens eine zweite Energiespeichergruppe (132) über wenigstens zwei unterschiedliche Energiespeicher (100, 101) zur Erzeugung einer Kennlinie (140) mit mindestens zwei Kennlinienabschnitten (142, 144) verfügt, und zwischen den ausschließlich gleichartigen Energiespeichern (89) der ersten Energiespeichergruppe (130) und den unterschiedlichen Energiespeichern (100, 101) der zweiten Energiespeichergruppe (132) ein vorbestimmtes Steifigkeitsverhältnis (SV) gebildet wird,
**dadurch gekennzeichnet, dass**
das Zwischen-Übertragungselement (94) drehfest mit dem Turbinenrad (19) verbunden ist, das relativ drehbar an dem abtriebsseitigen Übertragungselement (106) der abtriebsseitigen Dämpfungsvorrichtung (108) angreift, wobei das abtriebsseitige Übertragungselement (106) drehfest mit dem abtriebsseitigen Bauteil (116) verbunden ist, und
das Steifigkeitsverhältnis (SV) der ausschließlich gleichen Energiespeicher (89) der ersten Energiespeichergruppe (130) zu den ersten Energiespeichern (100) der zweiten Energiespeichergruppe (132) in einem Bereich zwischen 0,3 und 1,0 angesiedelt ist.

2. Torsionsschwingungsdämpfer an einer Überbrückungskupplung (48) einer hydrodynamischen Kopplungsanordnung (1), die zur Bildung eines hydrodynamischen Kreises (24) zumindest ein Pumpenrad (17) und ein Turbinenrad (19) aufweist, mit einer antriebsseitigen Dämpfungsvorrichtung (96), die mit dem Gehäuse (5) der Kopplungsanordnung (1) in Wirkverbindung bringbar und mit einem antriebsseitigen Übertragungselement (78) versehen ist, das über eine antriebsseitige Energiespeichergruppe (130) mit einem Zwischen-Übertragungselement (94) verbunden ist, und mit einer abtriebsseitigen Dämpfungsvorrichtung (108) für eine Wirkverbindung des Zwischen-Übertragungselementes (94) über eine abtriebsseitige Energiespeichergruppe (132) mit einem abtriebsseitigen Übertragungselement (106), das mit einem abtriebsseitigen Bauteil (116) der hydrodynamischen Kopplungsanordnung (1) verbunden ist, wobei zumindest eine erste Energiespeichergruppe (130) über ausschließlich gleichartige Energiespeicher (89) zur Erzeugung einer Kennlinie (134) mit einem einzigen Kennlinienabschnitt (137) und wenigstens eine zweite Energiespeichergruppe (132) über wenigstens zwei unterschiedliche Energiespeicher (100, 101) zur Erzeugung einer Kennlinie (140) mit mindestens zwei Kennlinienabschnitten (142, 144) verfügt, und zwischen den ausschließlich gleichartigen Energiespeichern (89) der ersten Energiespeichergruppe (130) und den unterschiedlichen Energiespeichern (100, 101) der zweiten Energiespeichergruppe (132) ein vorbestimmtes Steifigkeitsverhältnis (SV) gebildet wird, wobei jeweils die ausschließlich gleichartigen Energiespeicher (89) der ersten Energiespeichergruppe (130) zumindest im wesentlichen eine geringere Steifigkeit als die Energiespeicher (100, 101) der zweiten Energiespeichergruppe (132) aufweisen,
**dadurch gekennzeichnet, dass**
das Zwischen-Übertragungselement (94) drehfest mit dem Turbinenrad (19) verbunden ist, das relativ drehbar an dem abtriebsseitigen Übertragungselement (106) der abtriebsseitigen Dämpfungsvorrichtung (108) angreift, wobei das abtriebsseitige Übertragungselement (106) drehfest mit dem abtriebsseitigen Bauteil (116) verbunden ist, und
der einzige Kennlinienabschnitt (137) der Kennlinie (134) der mit geringerer Steifigkeit ausgebildeten ersten Energiespeichergruppe (130) zumindest im wesentlichen bei einem Momentenbetrag (ME1) endet, der zwischen 80% und 100% des vom Antrieb (2) erzeugten Momentes liegt, während der zweite Kennlinienabschnitt (144) der Kennlinie (140) der mit höherer Steifigkeit ausgebildeten zweiten Energiespeichergruppe (132) zumindest im wesentlichen bei einem Momentenbetrag (ME4) endet, der zwischen 110% und 120% des vom Antrieb (2) erzeugten Momentes liegt.

3. Torsionsschwingungsdämpfer nach Anspruch 1,
**dadurch gekennzeichnet,**
**dass** es sich bei der ersten Energiespeichergruppe (130) um die antriebsseitige Energiespeichergruppe (130) und bei der zweiten Energiespeichergruppe (132) um die abtriebsseitige Energiespeichergruppe (132) handelt.

4. Torsionsschwingungsdämpfer nach Anspruch 1 oder 2,
**dadurch gekennzeichnet,**
**dass** die ausschließlich gleichartigen Energiespeicher (89) der zumindest einen Energiespeichergruppe (130) bezüglich des Verlaufs ihres einzigen Kennlinienabschnittes (137) auf den Teillastbereich des Antriebes (2) mit Stellung einer Drosselklappe (146) innerhalb eines Bereiches von im wesentlichen 25% bis 50% abgestimmt sind.

5. Torsionsschwingungsdämpfer nach einem der Ansprüche 1 oder 2,
**dadurch gekennzeichnet,**
**dass** der einzige Kennlinienabschnitt (137) der antriebsseitigen Energiespeichergruppe (130) jeweils in einem Momentenbereich (ME) endet, der um einen vorbestimmten Betrag oberhalb des bei der bevorzugten Stellung der Drosselklappe (45) vom Antrieb (2) gelieferten statischen Drehmomentes (MS) liegt.

6. Torsionsschwingungsdämpfer nach Anspruch 5,
**dadurch gekennzeichnet,**
**dass** der einzige Kennlinienabschnitt (137) der antriebsseitigen Energiespeichergruppe (130) in einem Momentenbereich (ME) endet, der mindestens um einen zwischen 10% und 30% liegenden vorbestimmten Betrag oberhalb des bei der bevorzugten Stellung der Drosselklappe (45) vom Antrieb (2) gelieferten statischen Drehmomentes (MS) eingestellt ist.

7. Torsionsschwingungsdämpfer nach einem der Ansprüche 1 bis 6, bei welchem die zur Aufnahme der Energiespeicher (100, 101) vorgesehenen Ausnehmungen (150) des Zwischen-Übertragungselementes (94) sowie die entsprechenden Ausnehmungen (152) des abtriebsseitigen Übertragungselementes (106) der abtriebsseitigen Dämpfungsvorrichtung (108) zur Erzeugung unterschiedlich breiter Stege (154, 156) zwischen jeweils zwei Ausnehmungen (150, 152) mit unterschiedlichen Distanzwinkelbereichen (ϕ1, ϕ2) zueinander ausgebildet sind, wobei diejenigen Ausnehmungen (150, 152), die zur Aufnahme der dem ersten Kennlinienabschnitt (142) zugeordneten Energiespeicher (100) dienen, zur Bildung eines schmäleren Steges (154) durch einen geringeren Distanzwinkelbereich (ϕ1) voneinander beabstandet sind als diejenigen Ausnehmungen (150, 152), die zur Aufnahme der dem zweiten Kennlinienabschnitt (144) zugeordneten Energiespeicher (101) vorgesehen sind, und zur Bildung eines breiteren Steges (156) durch einen größeren Distanzwinkelbereich (ϕ2) voneinander beabstandet sind
**dadurch gekennzeichnet,**
**dass** die durch einen geringeren Distanzwinkelbereich (ϕ1) voneinander beabstandeten Ausnehmungen (150, 152) in Bezug zu einer Ausführung mit in gleichen Distanzwinkelbereichen voneinander beabstandeten Ausnehmungen um einen Winkelbetrag von maximal 5° aufeinander zu gerückt sind, während die durch einen größeren Distanzwinkelbereich (ϕ2) voneinander beabstandeten Ausnehmungen (150, 152) in Bezug zu einer Ausführung mit in gleichen Distanzwinkelbereichen voneinander beabstandeten Ausnehmungen (150, 152) um den Winkelbetrag von maximal 5° voneinander weg gerückt sind.

8. Torsionsschwingungsdämpfer nach Anspruch 7,
**dadurch gekennzeichnet,**
**dass** die durch einen geringeren Distanzwinkelbereich (ϕ1) voneinander beabstandeten Ausnehmungen (150, 152) in Bezug zu einer Ausführung mit in gleichen Distanzwinkelbereichen voneinander beabstandeten Ausnehmungen um einen Winkelbetrag von zumindest im wesentlichen 1° aufeinander zu gerückt sind, während die durch einen größeren Distanzwinkelbereich (ϕ2) voneinander beabstandeten Ausnehmungen (150, 152) in Bezug zu einer Ausführung mit in gleichen Distanzwinkelbereichen voneinander beabstandeten Ausnehmungen (150, 152) um den Winkelbetrag von zumindest im wesentlichen 1° voneinander weg gerückt sind.

## Claims

1. Torsional vibration damper in a lock-up clutch (48) of a hydrodynamic coupling arrangement (1) which has at least one impeller (17) and one turbine wheel (19) in order to form a hydrodynamic circuit (24), having a drive-side damping device (96) which can be brought into operative connection with the housing (5) of the coupling arrangement (1) and is provided with a drive-side transmission element (78) which is connected to an intermediate transmission element (94) via a drive-side energy-store group (130), and having an output-side damping device (108) for an operative connection of the intermediate transmission element (94) via an output-side energy-store group (132) to an output-side transmission element (106) which is connected to an output-side component (116) of the hydrodynamic coupling arrangement (1), at least one first energy-store group (130) having exclusively homogeneous energy stores (89) for generating a characteristic curve (134) with a single characteristic-curve section (137) and at least one second energy-store group (132) having at least two different energy stores (100, 101) for generating a characteristic curve (140) with at least two characteristic-curve sections (142, 144), and a predefined stiffness ratio (SV) being formed between the exclusively homogeneous energy stores (89) of the first energy-store group (130) and the different energy stores (100, 101) of the second energy-store group (132), **characterized in that** the intermediate transmission element (94) is connected fixedly to the turbine wheel (19) so as to rotate with it, which turbine wheel (19) acts in a relatively rotatable manner on the output-side transmission element (106) of the output-side damping device (108), the output-side transmission element (106) being connected fixedly to the output-side component (116) so as to rotate with it, and the stiffness ratio (SV) of the exclusively identical energy stores (89) of the first energy-store group (130) to the first energy stores (100) of the second energy-store group (132) being established in a range between 0.3 and 1.0.

2. Torsional vibration damper in a lock-up clutch (48) of a hydrodynamic coupling arrangement (1) which has at least one impeller (17) and one turbine wheel (19) in order to form a hydrodynamic circuit (24), having a drive-side damping device (96) which can be brought into operative connection with the housing (5) of the coupling arrangement (1) and is provided with a drive-side transmission element (78) which is connected to an intermediate transmission element (94) via a drive-side energy-store group (130), and having an output-side damping device (108) for an operative connection of the intermediate transmission element (94) via an output-side energy-store group (132) to an output-side transmission element (106) which is connected to an output-side component (116) of the hydrodynamic coupling arrangement (1), at least one first energy-store group (130) having exclusively homogeneous energy stores (89) for generating a characteristic curve (134) with a single characteristic-curve section (137) and at least one second energy-store group (132) having at least two different energy stores (100, 101) for generating a characteristic curve (140) with at least two characteristic-curve sections (142, 144), and a predefined stiffness ratio (SV) being formed between the exclusively homogeneous energy stores (89) of the first energy-store group (130) and the different energy stores (100, 101) of the second energy-store group (132), in each case the exclusively homogeneous energy stores (89) of the first energy-store group (130) having at least substantially a lower stiffness than the energy stores (100, 101) of the second energy-store group (132), **characterized in that** the intermediate transmission element (94) is connected fixedly to the turbine wheel (19) so as to rotate with it, which turbine wheel (19) acts in a relatively rotatable manner on the output-side transmission element (106) of the output-side damping device (108), the output-side transmission element (106) being connected fixedly to the output-side component (116) so as to rotate with it, and the single characteristic-curve section (137) of the characteristic curve (134) of the first energy-store group (130) which is configured with a lower stiffness ending at least substantially at a moment amount (ME1) which lies between 80% and 100% of the moment which is generated by the drive (2), while the second characteristic-curve section (144) of the characteristic curve (140) of the second energy-store group (132) which is configured with a higher stiffness ends at least substantially at a moment amount (ME4) which lies between 110% and 120% of the moment which is generated by the drive (2).

3. Torsional vibration damper according to Claim 1, **characterized in that** the first energy-store group (130) is the drive-side energy-store group (130) and the second energy-store group (132) is the output-side energy-store group (132).

4. Torsional vibration damper according to Claim 1 or 2, **characterized in that** the exclusively homogeneous energy stores (89) of the at least one energy-store group (130) are adapted with regard to the course of their single characteristic-curve section (137) to the part-load range of the drive (2) with actuation of a throttle valve (146) within a range from substantially 25% to 50%.

5. Torsional vibration damper according to either of Claims 1 and 2, **characterized in that** the single characteristic-curve section (137) of the drive-side energy-store group (130) in each case ends in a moment range (ME) which lies above the static torque (MS) which is delivered by the drive (2) in the preferred position of the throttle valve (45) by a predefined amount.

6. Torsional vibration damper according to Claim 5, **characterized in that** the single characteristic-curve section (137) of the drive-side energy-store group (130) ends in a moment range (ME) which is set above the static torque (MS) which is delivered by the drive (2) in the preferred position of the throttle valve (45) at least by a predefined amount which lies between 10% and 30%.

7. Torsional vibration damper according to one of Claims 1 to 6, in which the recesses (150) of the intermediate transmission element (94) which are provided for receiving the energy stores (100, 101) and the corresponding recesses (152) of the output-side transmission element (106) of the output-side damping device (108) are configured with different spacing angular ranges (ϕ1, ϕ2) with respect to one another in order to produce webs (154, 156) of different width between in each case two recesses (150, 152), those recesses (150, 152) which serve to receive the energy stores (100) which are assigned to the first characteristic-curve section (142) being spaced apart from one another by a smaller spacing angular range (ϕ1), in order to form a narrower web (154), than those recesses (150, 152) which are provided for receiving the energy stores (101) which are assigned to the second characteristic-curve section (144), and being spaced apart from one another by a larger spacing angular range (ϕ2) in order to form a wider web (156), **characterized in that** the recesses (150, 152) which are spaced apart from one another by a smaller spacing angular range (ϕ1) are moved towards one another by an angular amount of at most 5° in relation to an embodiment with recesses which are spaced apart from one another in identical spacing angular ranges, while the recesses (150, 152) which are spaced apart from one another by a larger spacing angular range (ϕ2) are moved away from one another by the angular amount of at most 5° in relation to an embodiment with recesses (150, 152) which are spaced apart from one another in identical spacing angular ranges.

8. Torsional vibration damper according to Claim 7, **characterized in that** the recesses (150, 152) which are spaced apart from one another by a smaller spacing angular range (ϕ1) are moved towards one another by an angular amount of at least substantially 1° in relation to an embodiment with recesses which are spaced apart from one another in identical spacing angular ranges, while the recesses (150, 152) which are spaced apart from one another by a larger spacing angular range (ϕ2) are moved away from one another by the angular amount of at least substantially 1° in relation to an embodiment with recesses (150, 152) which are spaced apart from one another in identical spacing angular ranges.

## Revendications

1. Amortisseur d'oscillations de torsion pour un embrayage de court-circuitage (48) d'un agencement d'accouplement hydrodynamique (1), qui présente, pour former un circuit hydrodynamique (24), au moins une roue de pompe (17) et une roue de turbine (19), avec un dispositif d'amortissement (96) du côté de l'entraînement, qui peut être amené en liaison fonctionnelle avec le boîtier (5) de l'agencement d'accouplement (1) et qui est pourvu d'un élément de transfert (78) du côté de l'entraînement, qui est connecté par le biais d'un groupe d'accumulateurs d'énergie (130) du côté d'entraînement à un élément de transfert intermédiaire (94), et avec un dispositif d'amortissement (108) du côté de la sortie pour une liaison fonctionnelle de l'élément de transfert intermédiaire (94), par le biais d'un groupe d'accumulateurs d'énergie (132) du côté de la sortie, avec un élément de transfert (106) du côté de la sortie, qui est connecté à un composant (116) du côté de la sortie de l'agencement d'accouplement hydrodynamique (1), au moins un premier groupe d'accumulateurs d'énergie (130) disposant d'accumulateurs d'énergie (89) exclusivement de même type pour produire une courbe caractéristique (134) avec une portion de courbe caractéristique unique (137) et au moins un deuxième groupe d'accumulateurs d'énergie (132) disposant d'au moins deux accumulateurs d'énergie différents (100, 101) pour produire une courbe caractéristique (140) avec au moins deux portions de courbe caractéristique (142, 144) et entre les accumulateurs d'énergie (89) exclusivement de même type du premier groupe d'accumulateurs d'énergie (130) et les accumulateurs d'énergie différents (100, 101) du deuxième groupe d'accumulateurs d'énergie (132), un rapport de rigidité prédéterminé (SV) étant formé,
**caractérisé en ce que**
l'élément de transfert intermédiaire (94) est connecté de manière solidaire en rotation à la roue de turbine (19), qui vient en prise de manière relativement rotative avec l'élément de transfert (106) du côté de la sortie du dispositif d'amortissement (108) du côté de la sortie, l'élément de transfert (106) du côté de la sortie étant connecté de manière solidaire en rotation au composant (116) du côté de la sortie, et
le rapport de rigidité (SV) des accumulateurs d'énergie (89) exclusivement différents du premier groupe d'accumulateurs d'énergie (130) aux premiers accumulateurs d'énergie (100) du deuxième groupe d'accumulateurs d'énergie (132) étant établi dans une plage entre 0,3 et 1,0.

2. Amortisseur d'oscillations de torsion pour un embrayage de court-circuitage (48) d'un agencement d'accouplement hydrodynamique (1), qui présente, pour former un circuit hydrodynamique (24), au moins une roue de pompe (17) et une roue de turbine (19), avec un dispositif d'amortissement (96) du côté de l'entraînement, qui peut être amené en liaison fonctionnelle avec le boîtier (5) de l'agencement d'accouplement (1) et qui est pourvu d'un élément de transfert (78) du côté de l'entraînement, qui est connecté par le biais d'un groupe d'accumulateurs d'énergie (130) du côté d'entraînement à un élément de transfert intermédiaire (94), et avec un dispositif d'amortissement (108) du côté de la sortie pour une liaison fonctionnelle de l'élément de transfert intermédiaire (94), par le biais d'un groupe d'accumulateurs d'énergie (132) du côté de la sortie, avec un élément de transfert (106) du côté de la sortie, qui est connecté à un composant (116) du côté de la sortie de l'agencement d'accouplement hydrodynamique (1), au moins un premier groupe d'accumulateurs d'énergie (130) disposant d'accumulateurs d'énergie (89) exclusivement de même type pour produire une courbe caractéristique (134) avec une portion de courbe caractéristique unique (137) et au moins un deuxième groupe d'accumulateurs d'énergie (132) disposant d'au moins deux accumulateurs d'énergie différents (100, 101) pour produire une courbe caractéristique (140) avec au moins deux portions de courbe caractéristique (142, 144) et entre les accumulateurs d'énergie (89) exclusivement de même type du premier groupe d'accumulateurs d'énergie (130) et les accumulateurs d'énergie différents (100, 101) du deuxième groupe d'accumulateurs d'énergie (132), un rapport de rigidité prédéterminé (SV) étant formé, les accumulateurs d'énergie (89) exclusivement de même type du premier groupe d'accumulateurs d'énergie (130) présentant au moins essentiellement une plus faible rigidité que les accumulateurs d'énergie (100, 101) du deuxième groupe d'accumulateurs d'énergie (132),
**caractérisé en ce que**
l'élément de transfert intermédiaire (94) est connecté de manière solidaire en rotation à la roue de turbine (19), qui vient en prise de manière relativement rotative avec l'élément de transfert (106) du côté de la sortie du dispositif d'amortissement (108) du côté de la sortie, l'élément de transfert (106) du côté de la sortie étant connecté de manière solidaire en rotation au composant (116) du côté de la sortie, et
la portion de courbe caractéristique unique (137) de la courbe caractéristique (134) du premier groupe d'accumulateurs d'énergie (130) réalisé avec la plus faible rigidité se terminant au moins essentiellement à une valeur de couple (ME1) qui est comprise entre 80 % et 100 % du couple produit par l'entraînement (2), tandis que la deuxième portion de courbe caractéristique (144) de la courbe caractéristique (140) du deuxième groupe d'accumulateurs d'énergie (132) réalisé avec la plus grande rigidité se termine au moins essentiellement à une valeur de couple (ME4) qui est comprise entre 110 % et 120 % du couple produit par l'entraînement (2).

3. Amortisseur d'oscillations de torsion selon la revendication 1,
**caractérisé en ce que**
le premier groupe d'accumulateurs d'énergie (130) est le groupe d'accumulateurs d'énergie (130) du côté de l'entraînement et le deuxième groupe d'accumulateurs d'énergie (132) est le groupe d'accumulateurs d'énergie (132) du côté de la sortie.

4. Amortisseur d'oscillations de torsion selon la revendication 1 ou 2,
**caractérisé en ce que**
les accumulateurs d'énergie (89) exclusivement de même type de l'au moins un groupe d'accumulateurs d'énergie (130) sont ajustés par rapport à l'allure de leur portion de courbe caractéristique unique (137), sur la plage de charge partielle de l'entraînement (2), par positionnement d'un clapet d'étranglement (146), dans une plage de sensiblement 25 % à 50 %.

5. Amortisseur d'oscillations de torsion selon l'une quelconque des revendications 1 ou 2,
**caractérisé en ce que**
la portion de courbe caractéristique unique (137) du groupe d'accumulateurs d'énergie (130) du côté de l'entraînement se termine à chaque fois par une plage de couples (ME) qui se situe à une valeur prédéterminée au-dessus du couple statique (MS) fourni par l'entraînement (2) dans la position préférée du clapet d'étranglement (45).

6. Amortisseur d'oscillations de torsion selon la revendication 5,
**caractérisé en ce que**
la portion de courbe caractéristique unique (137) du groupe d'accumulateurs d'énergie (130) du côté de l'entraînement se termine par une plage de couples (ME) qui se situe à une valeur prédéterminée comprise entre 10 % et 30 % au-dessus du couple statique (MS) fourni par l'entraînement (2) dans la position préférée du clapet d'étranglement (45).

7. Amortisseur d'oscillations de torsion selon l'une quelconque des revendications 1 à 6,
dans lequel les logements (150) de l'élément de transfert intermédiaire (94) prévus pour recevoir les accumulateurs d'énergie (100, 101) ainsi que les logements (152) correspondants de l'élément de transfert (106) du côté de la sortie, du dispositif d'amortissement (108) du côté de la sortie, sont réalisés avec des plages angulaires d'espacement mutuel (ϕ1, ϕ2) différentes pour produire des nervures (154, 156) de largeurs différentes entre deux logements respectifs (150, 152), les logements (150, 152) qui servent à recevoir les accumulateurs d'énergie (100) associés à la première portion de courbe caractéristique (142) étant espacés les uns des autres, pour former une nervure (154) plus étroite, d'une plus petite plage angulaire d'espacement (ϕ1) que les logements (150, 152) qui sont prévus pour recevoir les accumulateurs d'énergie (101) associés à la deuxième portion de courbe caractéristique (144) et qui sont espacés l'un de l'autre d'une plus grande plage angulaire d'espacement (ϕ2) pour former une nervure plus large (156),
**caractérisé en ce que**
les logements (150, 152) espacés les uns des autres d'une plus petite plage angulaire d'espacement (ϕ1), par rapport à une réalisation avec des logements espacés les uns des autres de mêmes plages angulaires d'espacement, sont avancés les uns vers les autres d'une valeur angulaire de 5° au maximum, tandis que les logements (150, 152) espacés les uns des autres d'une plus grande plage angulaire d'espacement (ϕ2) par rapport à une réalisation avec des logements espacés les uns des autres de mêmes plages angulaires d'espacement, sont reculés les uns des autres de la valeur angulaire de 5° au maximum.

8. Amortisseur d'oscillations de torsion selon la revendication 7,
**caractérisé en ce que**
les logements (150, 152) espacés les uns des autres d'une plus petite plage angulaire d'espacement (ϕ1), par rapport à une réalisation avec des logements espacés les uns des autres de mêmes plages angulaires d'espacement, sont avancés les uns vers les autres d'une valeur angulaire d'au moins essentiellement 1°, tandis que les logements (150, 152) espacés les uns des autres d'une plus grande plage angulaire d'espacement (ϕ2) par rapport à une réalisation avec des logements espacés les uns des autres de mêmes plages angulaires d'espacement, sont reculés les uns des autres de la valeur angulaire d'au moins essentiellement 1°.
